# EUROPEAN PATENT SPECIFICATION

(11) **EP 1 956 721 B1**
(45) Date of publication and mention of the grant of the patent: **10.11.2010**
(21) Application number: 08250512.4
(22) Date of filing: 12.02.2008
(51) Int. Cl.: H04B 1/38

(54) **Case for electrical device and method of using same**
Gehäuse für elektrische Vorrichtungen und Verfahren zu seiner Verwendung
Boîtier pour dispositif électrique et son procédé d'utilisation

(30) Priority: 12.02.2007 US 706664
(43) Date of publication of application: 13.08.2008
(73) Proprietor: Belkin International, Inc., Playa Vista, CA 90094 (US)
(72) Inventor: Chan, James, San Marino, California 91108 (US)
(74) Representative: Lawrence, John

(56) References cited:
- EP-A- 0 571 998
- US-A- 5 607 054

## Description

### FIELD OF THE INVENTION

This invention relates generally to cases for electrical devices, and relates more particularly to such cases that provide easy access to and protection of electrical devices and methods of using the same.

### BACKGROUND OF THE INVENTION

Advancing technology has made portable electrical devices increasingly popular and has given such devices an ever increasing array of capabilities. Some electrical devices, such as digital music and video players, cellular phones, personal digital assistants, handheld digital computers and the like, include the capability to be unfolded from a compact configuration into an extended configuration to allow easier use. For example, one digital music player includes a speaker and a body. The body of the digital music player can move from a compact configuration where the front of the speaker is located against the back side of the body to an extended configuration where the body is extended away from the speaker at an angle. It would be convenient for the user of such electrical devices if a protective case allowed operation of the electrical device in both configurations without requiring the user to hold the electrical device or remove it from the case.

Similarly, some portable electrical devices are capable of displaying images or videos. While it is possible to view the images or videos while holding such video-capable devices in one's hand, it would often be more convenient and more comfortable to set such electrical devices down and have them maintain a position in which the images and videos can be viewed easily.

Accordingly, a need exists for a case for an electrical device that both protects the electrical device and allows it to maintain a hands-free operating and viewing position.

Documents US 5 607 054 and EP 0 571 998 disclose two examples of prior art cases.

### BRIEF DESCRIPTION OF THE DRAWINGS

The invention will be better understood from a reading of the following detailed description, taken in conjunction with the accompanying figures in the drawings in which:
FIG. 1 illustrates a top, back, side isometric view of a case for an electrical device in an open position, according to a first embodiment;
FIG. 2 illustrates a top, back, side isometric view of the case of FIG. 1 in the open position and enclosing an electrical device, according to the first embodiment;
FIG. 3 illustrates a back, side isometric view of the case of FIG. 1 in a closed position, according to the first embodiment;
FIG. 4 illustrates a front, side isometric view of the case of FIG. 1 in the closed position and enclosing the electrical device of FIG. 2, according to the first embodiment;
FIG. 5 illustrates a side view of the case of FIG. 1 in the open configuration, according to the first embodiment;
FIG. 6 illustrates a cross sectional view along the line I-I of the case of FIG. 1, according to the first embodiment;
FIG. 7 illustrates a cross sectional view along line II-II of the case of FIG. 4 in the closed configuration and enclosing the electrical device of FIG. 2, according to the first embodiment;
FIG. 8 illustrates a back, side view of a second case, according to a second embodiment;
FIG. 9 illustrates a flow chart for a method of using a case with an electrical device, according to an embodiment;
FIG. 10 illustrates a flow chart for a method of manufacturing a case, according to an embodiment; and
FIG. 11 illustrates a flow chart for another method of using a case with an electrical device, according to an embodiment.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "include," and "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical, physically, mechanical, or other manner. The term "on," as used herein, is defined as on, at, or otherwise adjacent to or next to or over.

### DETAILED DESCRIPTION OF EXAMPLES OF EMBODIMENTS

In one embodiment, a case for an electrical device is capable of being placed in an open configuration on a flat surface. In this embodiment, the case can include: (a) a first panel with a first surface capable of being removably coupled to at least a portion of the electrical device; (b) a second panel with an exterior surface and adjacent to the first panel; and (c) at least one protrusion on the exterior surface of the second panel. When the case is in the open configuration, when the protrusion is placed on the flat surface, and when the first surface is coupled to the portion of the electrical device, the second panel is not coupled to the electrical device, and the protrusion is capable of at least partially supporting the case such that the first panel forms a first angle with the flat surface and does not contact the flat surface.

In another embodiment, a holder for an electrical device can include: (a) one or more walls defining an interior space and capable of removably enclosing the electrical device in the interior space; and (b) at least one viewing screen in one of the walls. In this embodiment, the electrical device is viewable and usable through the at least one viewing screen, and at least a first portion of the viewing screen extends away from the wall towards the electrical device when the walls enclose the electrical device.

In a further embodiment, a method of using a case with an electrical device can include: (a) providing the case to have: (1) a first panel with an interior surface; (2) a second panel with an exterior surface and adjacent to the first panel; and (3) at least one protrusion on the exterior surface of the second panel; (b) coupling the electrical device to the case at the interior surface of the first panel; and (c) placing the case in an open configuration and on a flat surface with the protrusion in contact with the flat surface such that the first panel is separated from the flat surface.

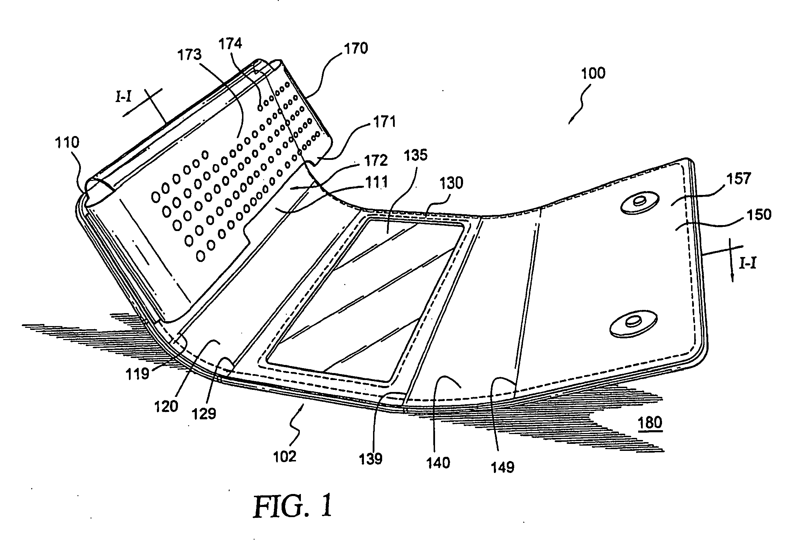

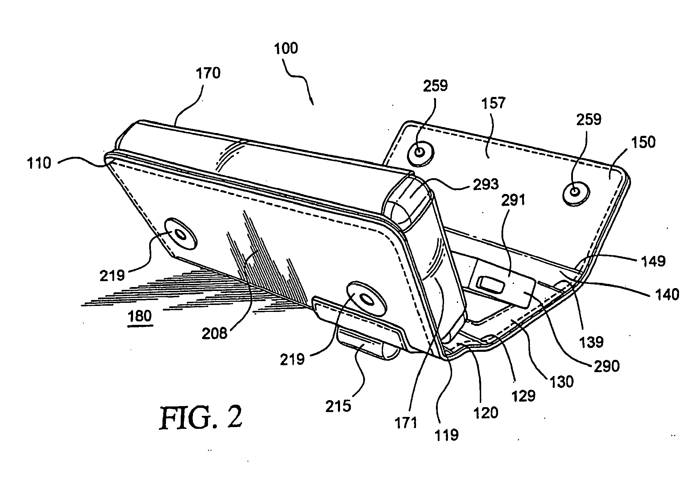

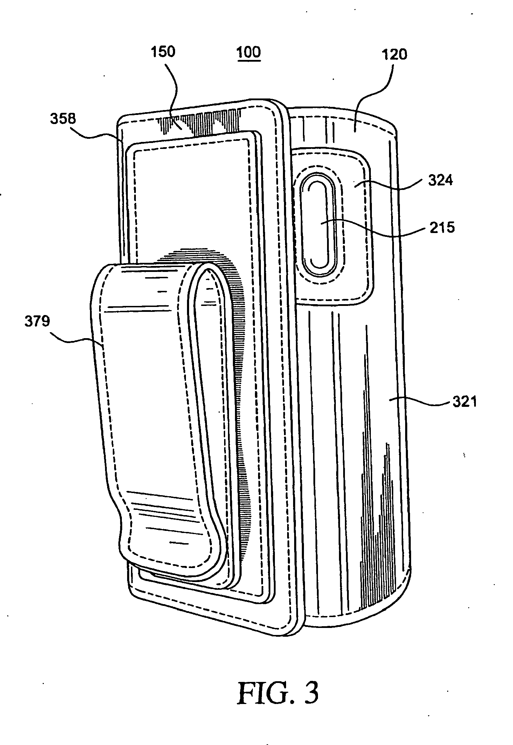

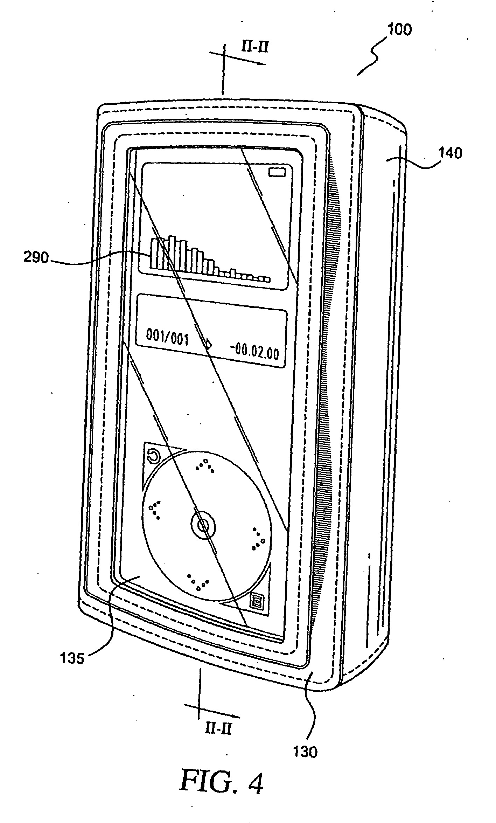

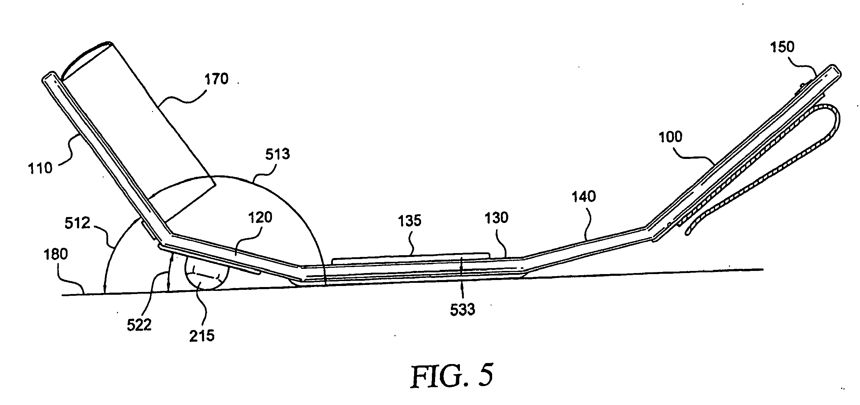

Turning to the drawings, FIG. 1 illustrates a top, back, side isometric view of a case 100 for an electrical device, according to a first embodiment. FIG. 2 illustrates a top, back, side isometric view of case 100 in the open position and enclosing an electrical device 290, according to the first embodiment. FIG. 3 illustrates a back, side isometric view of case 100 in a closed position, according to the first embodiment. FIG. 4 illustrates a front, side isometric view of case 100 in the closed position and enclosing electrical device 290, according to the first embodiment. FIG. 5 illustrates a side view of case 100 in the open configuration, according to the first embodiment. Case 100 is merely exemplary and is not limited to the embodiments presented herein. Case 100 can be employed in many different embodiments or examples not specifically depicted or described herein.

In the example shown in FIGs. 1-5, holder or case 100 can include: (a) one or more walls 102 defining an interior space when case 100 is in the closed position and capable of removably enclosing electrical device 290 in the interior space; (b) at least one protrusion 215; and (c) at least one viewing screen 135 in one of walls 102. In one embodiment, walls 102 includes: (a) a panel 110 with an interior surface 111 capable of being removably coupled to at least a portion of electrical device 290; (b) a panel 120 with an exterior surface 321 and adjacent to panel 110; (c) a panel 130 capable of supporting a portion of electrical device 290 when case 100 is in the open position and adjacent to panel 120; (d) a panel 140 adjacent to panel 130; and (e) a panel 150 adjacent to panel 140. In one embodiment, protrusion 215 can be on exterior surface 321. In the same or a different embodiment, viewing screen 135 can be located in panel 130. In some examples, case 100 can also include a clip 379 on an exterior surface 358 of panel 150.

In one embodiment, at least a portion of panel 110 can be contiguous with and/or continuous with at least a portion of panel 120. Likewise, at least a portion of panel 120 can be contiguous with and/or continuous with at least a portion of panel 130. In the same or a different embodiment, at least a portion of panel 130 can be contiguous with and/or continuous with at least a portion of panel 140. Additionally, in some embodiments, at least a portion of panel 140 can be contiguous with and/or continuous with at least a portion of panel 150.

Furthermore, in some embodiments, panel 110 can be coupled to panel 120 at or by a hinge 119 with panels 110 and 120 capable of being folded along hinge 119. Likewise, panel 120 can be coupled to panel 130 at or by a hinge 129 with panels 120 and 130 capable of being folded along hinge 129. In the same or a different embodiment, panel 130 can be coupled to panel 140 at or by a hinge 139 with panels 130 and 140 capable of being folded along hinge 139. In some embodiments, panel 140 can be coupled to panel 150 at or by a hinge 149 with panels 140 and 150 capable of being folded along hinge 149. In some embodiments, hinges 119, 129, 139, and/or 149 are rows of stitching that extend across the width of case 100. In other embodiments, hinges 119, 129, 139, and/or 149 are fold lines.

In one embodiment, case 100 is capable of being placed in open or closed configurations. FIGs. 1 and 2 illustrate case 100 in the open configuration on a flat surface 180, and FIGs. 3 and 4 illustrate case 100 in the closed configuration. In the illustrated embodiment, when case 100 is in a closed configuration, panel 150 wraps around panel 110 such that an exterior surface 208 of panel 110 touches or contacts an interior surface 157 of panel 150. In the same or a different embodiment, panel 110 further includes a coupling mechanism 219 on exterior surface 208 of panel 110 capable of coupling to a coupling mechanism 259 on interior surface 157 of panel 150. For example, coupling mechanisms 219 and 259 can be complementary snap buttons that can be used to hold case 100 in the closed configuration. In some examples, coupling mechanisms 219 and 259 can contain magnets to help align the snap buttons.

In other embodiments, walls 102 can have different relative positions when case 100 is in an open or closed configuration. When case 100 is in the open configuration, walls 102 can be folded together to place the case in the closed configuration. Likewise, when in a closed configuration, walls 102 can be unfolded to place the case in an open configuration. In one example, walls 102 are folded and unfolded along hinges 119, 129, 139, and 149. When case 100 is in a closed configuration and interior surface 111 is coupled to a portion of electrical device 290, electrical device 290 is located in the interior space of walls 102.

In an alternative embodiment, case 100 can only be in a closed configuration. In yet another alternative embodiment, case 100 can only be in an opened position.

As shown in FIG. 5, when case 100 is in the open configuration, protrusion 215 can be placed on surface 180, and protrusion 215 is capable of at least partially supporting case 100 such that panel 110 forms an angle 512 with surface 180, and panel 110 does not contact surface 180. Furthermore, when case 100 is in the open configuration, panel 110 also forms an angle 513 with surface 180 and/or panel 130, and panel 120 forms an angle 522 with surface 180. Panel 130 also forms an angle 533 with surface 180 when case 100 is in the open configuration.

Angles 512, 513, 522, and 533 can be set by changing the size, shape, construction, and/or relative positions of walls 102 and/or protrusion 215. In one example, angles 512, 513, 522, and 533 are set during the manufacturing process. In one embodiment, angle 513 is complementary with angle 512. For example, angle 512 is approximately fifty-five (55) degrees and angle 513 is approximately one hundred and twenty-five (125) degrees. In this embodiment, angle 522 is less than angle 512. In the same or a different embodiment, panel 130 rests on surface 180, and angle 533 is approximately zero. Angle 533 being approximately zero can mean that panel 130 is substantially parallel to surface 180.

In another example, angles 512, 513, 522, and/or 533 are set such that panel 110 is at the most comfortable viewing or operating position for a user of electrical device 290. In some embodiments, angles 512, 513, 522, and 533 can be set to complement the features of electrical device 290. For example, if electrical device 290 is mostly used for viewing images or videos, angles 512, 513, 522, and 533 can be different than if the user interaction with electrical device 290 is mainly to change a setting on a touch screen on electrical device 290.

Referring again to FIGs. 1-5, a coupling mechanism 170 can be located at interior surface 111. Coupling mechanism 170 is capable of being removably coupled to at least a portion of electrical device 290. In one example, coupling mechanism 170 can include a housing 171. In one embodiment, housing 171 can be coupled to panel 110 such that housing 171 has at least one partially open side 172, and the rest or a portion of the rest of the perimeter of housing 171 is coupled to panel 110. For example, the perimeter of housing 171, with the exception of side 172, can be sewn to panel 110. Electrical device 290 or a portion thereof can be inserted into housing 171 at side 172.

In the embodiment shown in FIG. 2, electrical device 290 is in the extended configuration. In this example, a portion of electrical device 290 is inside of housing 171, and a portion 291 of electrical device 290 is outside of housing 171. A part 293 of the portion of electrical device 290 inside housing 171 can be exposed at one or more corners of housing 171. In other examples, the whole electrical device can be placed inside housing 171. In some embodiments, coupling mechanism 170 allows electrical device 290 to move from a compact configuration to an extended configuration without uncoupling electrical device 290 from panel 110.

In one embodiment, housing 171 contains a set of holes 174 at a surface 173 of housing 171. In one example, set of holes 174 can improve the sound quality coming from electrical device 290 through housing 171. In the same or a different embodiment, housing 171 can be made from a plastic, for example, clear polyvinyl chloride (PVC). In an alternative embodiment, housing 171 is made from nylon, leather, suede, fabric, or the like.

In alternative embodiments, coupling mechanism 170 can employ other methods of coupling interior surface 111 to at least a portion of electrical device 290. For example, coupling mechanism 170 can include one or more straps that can be wrapped around electrical device 290. In another alternative example, coupling mechanism 170 can include an attachment mechanism that can be coupled to a complementary attachment mechanism on electrical device 290. For example, the attachment mechanism can include a one or connectors that can couple to one or more of complementary connectors (such as Velcro ® material) on the back side of electrical device 290.

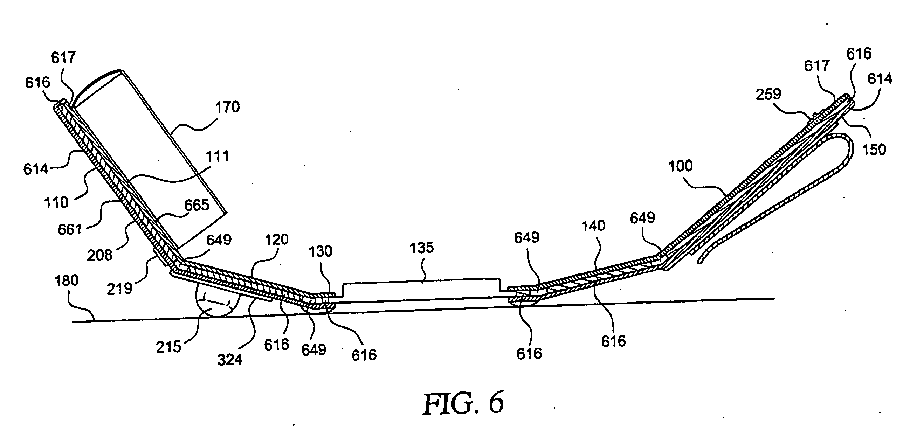

FIG. 6 illustrates a cross sectional view along line I-I (FIG. 1) of case 100, according to the first embodiment. In the embodiment illustrated in FIG. 6, panel 110 includes: (a) an outer layer 614 with an exterior surface 661; (b) a stiffener layer 616 coupled to outer layer 614; (c) an inner layer 617 with an interior surface 665 and coupled to stiffener layer 616; and (d) coupling mechanism 170. In some embodiments, interior surface 665 and exterior surface 661 form at least a portion of interior surface 111 and exterior surface 208, respectively, of panel 110.

In one embodiment, the construction of panels 120, 130, 140, and/or 150 can be identical to or substantially similar to panel 110. For example, outer layer 614 and inner layer 617 can extend continuously through panels 120, 130, 140, and 150. In panel 130, outer layer 614 and inner layer 617 can run around the edges of viewing screen 135. In some embodiments, stiffener layer 616 can also extend continuously through panels 120, 130, 140, and 150. However, in the embodiment illustrated in FIG. 6, stiffener layer 616 is not present at hinge regions 649 of hinges 119, 129, 139, and 149. In this embodiment, stiffener layer 616 is not present at hinge regions 649 to allow easier folding of walls 102. In an alternative example, panels 120, 130, 140, and/or 150 do not include a stiffener layer, or only panels 120 and 140 do not include a stiffening layer. In yet another embodiment, walls 102 are formed by a single layer (e.g. outer layer 614 or inner layer 617).

In some embodiments, outer layer 614 and inner layer 617 are made of leather (for example, split leather), suede, PVC, polyurethane, nylon, fabric, or the like. Stiffener layer 616 can be made of cardboard, plastic, foam, or the like. In one example, stiffener layer 616 includes a layer of acrylonatrile butadiene styrene (ABS) and cardboard. In some embodiments, stiffener layer 616 lends rigidity to walls 102, and outer layer 614, stiffener layer 616, and/or inner layer 617 provide protection for electrical device 290 (FIGs. 2 and 4).

In some examples, outer layer 614, stiffener layer 616, and inner layer 617 are stitched together. In other examples, some or all of outer layer 614, stiffener layer 616, and inner layer 617 can be attached together with an adhesive, for example, instead of or in addition to stitching.

Referring to FIGs. 2, 3 and 6, protrusion 215 can be coupled to exterior surface 321 of panel 120. In one example, protrusion 215 includes a rim (not shown), which can be sewn and/or attached with an adhesive to panel 120. In one embodiment, the rim of protrusion 215 is sewn to outer layer 614 and stiffener layer 616 in panel 120. In the same or a different embodiment, panel 120 can further include a covering 324 around protrusion 215 and over the rim of protrusion 215. In one example, a covering 324 is sewn to exterior surface 321 and can provide extra support and strength to case 100 when protrusion 215 is in contact with surface 180 and case 100 is in the open configuration.

In one embodiment, protrusion 215 is made from a non-skid material and is used to prevent case 100 from sliding on surface 180. In one example, protrusion 215 can be composed of rubber, silicon, plastic, or the like. In the example illustrated in FIGs. 2 and 3, case 100 includes a single protrusion 215. However, in an alternative embodiment, case 100 can include multiple protrusions.

Referring again to FIGs. 1-5, viewing screen 135 can be located on panel 130. Viewing screen 135 allows a user to view and use electrical device 290 when case 100 is in the closed configuration. That is, buttons, screens, or controls on the main surface of electrical device 290 can be viewed, pressed, pushed, and/or touched through viewing screen 135.

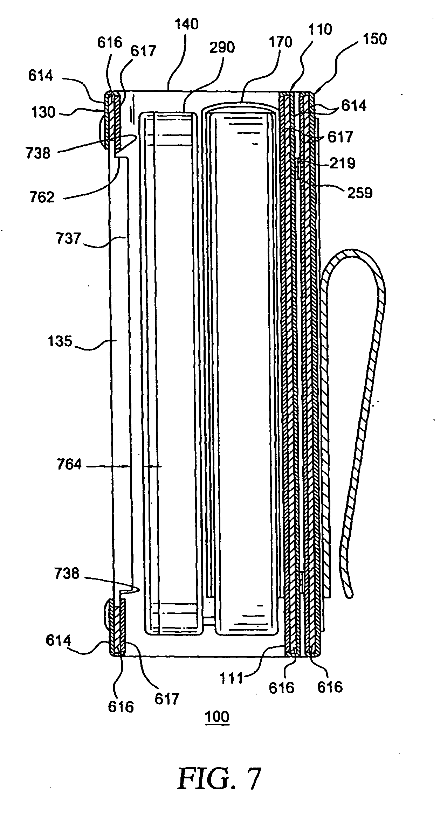

FIG. 7 illustrates a cross sectional view along line II-II (FIG. 4) of electrical device 290 and case 100 in the closed configuration, according to the first embodiment. As shown in FIG. 7, viewing screen 135 can include: (a) a portion 737 with a perimeter 762; and (b) a rim 738 coupled to perimeter 762. In this embodiment, portion 737 extends from panel 130 towards electrical device 290 when interior surface 111 is coupled to a portion of electrical device 290 and case 100 is in the closed configuration. That is, portion 737 shrinks an air gap 764 between electrical device 290 and case 100. Shrinking air gap 764 can improve the user interaction with electrical device 290. For example, the smaller distance between viewing screen 135 and electrical device 290 can decrease the likelihood the user will accidentally press, push, and/or touch the wrong button, screen, or controls on the main surface of electrical device 290.

In one example, portion 737 can extend three millimeters (mm) away from panel 130 and towards electrical device 290. In another example, portion 737 contacts electrical device 290 when case 100 is in the closed configuration. In the same or a different example, rim 738 is thinner than portion 737. For example, the thickness of rim 738 can be substantially equal to, or less than the thickness of panel 130. Additionally, the thickness of portion 737 can be equal to or greater than the thickness of panel 130.

Portion 737 comprises a first material in one embodiment. In some embodiments, rim 738 also is composed of the same material. In one example, the first material can be a clear plastic, for example polyvinyl chloride (PVC). In a non-illustrated example, viewing screen 135 includes one or more holes to improve the sound quality emanating from electrical device 290 when case 100 is in the closed configuration.

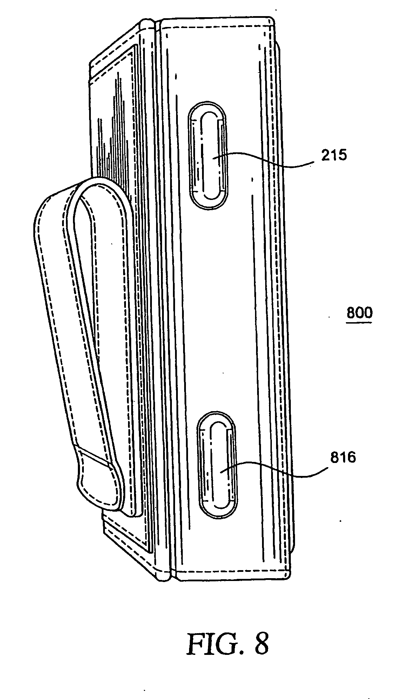

FIG. 8 illustrates a back, side view of a case 800, according to a second embodiment. In this embodiment, case 800 includes protrusions 215 and 816. In some embodiments, protrusions 215 and 816 can be preferred to only having protrusion 215 because two or more protrusions can provide better support for case 800 than a single protrusion.

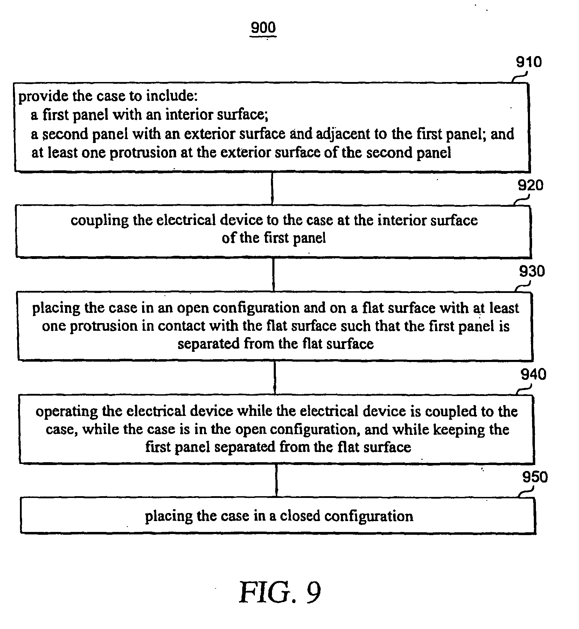

FIG. 9 illustrates a flow chart 900 for a method of using a case with an electrical device, according to an embodiment. Flow chart 900 in FIG. 9 includes a step 910 of providing the case to include: (a) a first panel with an interior surface; (b) a second panel with an exterior surface and adjacent to the first panel; and (c) at least one protrusion on the exterior surface of the second panel. As an example, the case can be similar to cases 100 and 800 of FIGs. 1 and 8, respectively. The at least one protrusion can be similar to protrusions 215 and 816 of FIGs. 2 and 8, respectively. The first panel and the interior surface of the first panel can be similar to panel 110 and interior surface 111, respectively, of FIG. 1. The second panel and the exterior surface of the second panel can be similar to panel 120 and exterior surface 321 of FIGs. 1 and 3, respectively.

Flow chart 900 in FIG. 9 continues with a step 920 of coupling the electrical device to the case at the interior surface of the first panel. As an example, the electrical device can be coupled to the case at the interior surface of the first panel similar to the coupling of electrical device 290 and interior surface 111 in FIG. 2. In one embodiment, the electrical device can be coupled to the case at the interior surface of the first panel using a coupling mechanism. In this embodiment, the coupling mechanism can be similar to coupling mechanism 170 of FIG. 1.

Subsequently, flow chart 900 in FIG. 9 includes a step 930 of placing the case in an open configuration and on a flat surface with the at least one protrusion in contact with the flat surface such that the first panel remains separated from the flat surface. In one example, the flat surface can be similar to surface 180 of FIG. 1, and the case in the open configuration can be similar to the open configuration of case 100 shown in FIGs. 1, 2, 5, and 6.

In one embodiment, placing the case in the open configuration includes unfolding the case into an open configuration. In one example, the case can be unfolded by unfolding the walls of the case.

Next, flow chart 900 in FIG. 9 includes a step 940 of operating the electrical device while the electrical device is coupled to the case, while the case is in the open configuration, and while keeping the first panel separated from the flat surface.

Flow chart 900 in FIG. 9 continues with a step 950 of placing the case in a closed configuration. In one example, the case in the closed configuration can be similar to the closed configuration of case 100 shown in FIGs. 3 and 4. In one embodiment, the case can be placed in a closed configuration by folding together the walls of the case.

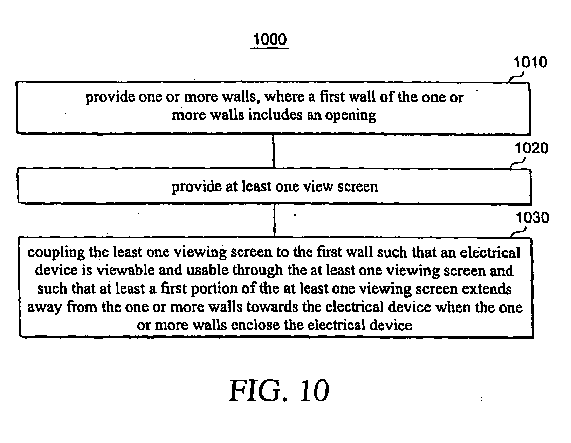

FIG. 10 illustrates a flow chart 1000 for a method of manufacturing a case, according to an embodiment. Flow chart 1000 in FIG. 10 includes a step 1010 of providing one or more walls, where a first wall of the one or more walls includes an opening. As an example, the walls and the first wall can be similar to walls 102 and panel 130, respectively, of FIG. 1.

Flow chart 1000 in FIG. 10 continues with a step 1020 of providing at least one viewing screen. As an example, the viewing screen can be similar to viewing screen 135 of FIGs. 1, 4, 6, and 7.

Subsequently, flow chart 1000 in FIG. 10 includes a step 1030 of coupling the at least one viewing screen to the first wall such that an electrical device is viewable and usable through the at least one viewing screen and such that at least a first portion of the at least one viewing screen extends away from the one or more walls towards the electrical device when the one or more walls enclose the electrical device. For example, the at least one viewing screen coupled to the first wall can be similar to panel 130 coupled to viewing screen 135 shown in FIGs. 1 and 4-7.

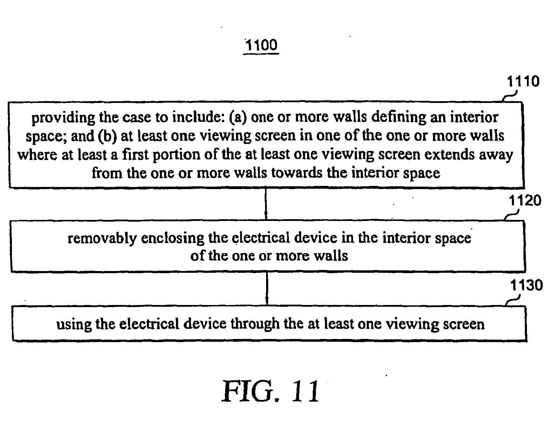

FIG. 11 illustrates a flow chart 1100 for a method of using a case with an electrical device, according to an embodiment. Flow chart 1100 in FIG. 11 includes a step 1110 of providing the case to include: (a) one or more walls defining an interior space; and (b) at least one viewing screen in one of the one or more walls where at least a first portion of the at least one viewing screen extends away from the one or more walls towards the interior space. In one example, the one or more walls and the at least one viewing screen can be similar to walls 102 and viewing screen 135, respectively, of FIG. 1. The first portion of the at least one viewing screen can be similar to portion 737 of FIG. 7.

Flow chart 1100 in FIG. 11 continues with a step 1120 of removably enclosing the electrical device in the interior space of the one or more walls. For example, the electrical device removably enclosed in the interior space of the one or more walls can be similar to electrical device 290 removably enclosed in walls 102, as shown in FIG. 4.

Subsequently, flow chart 1100 in FIG. 11 includes a step 1130 of using the electrical device through the at least one viewing screen.

Although the invention has been described with reference to specific embodiments, it will be understood by those skilled in the art that various changes may be made without departing from the scope of the invention. For example, to one of ordinary skill in the art, it will be readily apparent that viewing screen 135 can be placed inside of any of panels 110, 120, 140, or 150, instead of inside panel 130. In another example, two or more of panels 110, 120, 130, 140, and 150 can include viewing screens. In yet a further example, step 950 of flow chart 900 in FIG. 9 can occur after any of the steps 910, 920, 930, and 940. Additional examples of such changes have been given in the foregoing description. Accordingly, the disclosure of embodiments of the invention is intended to be illustrative of the scope of the invention and is not intended to be limiting. It is intended that the scope of the invention shall be limited only to the extent required by the appended claims.

For example, to one of ordinary skill in the art, it will be readily apparent that the case discussed herein may be implemented in a variety of embodiments, and that the foregoing discussion of certain of these embodiments does not necessarily represent a complete description of all possible embodiments. Rather, the detailed description of the drawings, and the drawings themselves, disclose at least one preferred embodiment of the invention, and may disclose alternative embodiments of the invention.

All elements claimed in any particular claim are essential to the invention claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A case (100) for an electrical device (290) capable of being placed in an open configuration on a flat surface (180), the case comprising:
a first panel (110) with a first surface (111) capable of being removably coupled to at least a portion of the electrical device;
a second panel (120) with an exterior surface (321) and adjacent to the first panel at a first hinge (119); and
at least one protrusion (215, 816) on the exterior surface of the second panel (120),
wherein:
when the case is in the open configuration, when the at least one protrusion (215, 816) is placed on the flat surface (180) and when the first surface (111) is coupled to the at least the portion of the electrical device, the at least one protrusion (215, 816), the second panel (120), and the first panel (110) are configured such that the at least one protrusion (215, 816) at least partially supports the case, the first panel (110) forms a first angle (512) with the flat surface (180), the second panel (120) contacts the first panel (110) only at the first hinge (119), and the first panel (110) does not contact the flat surface (180).

2. The case of claim 1, wherein:
the first angle (512) is substantially fifty-five (55) degrees; and
a second angle (513) between the first panel (110) and the flat surface (180) is substantially one hundred and twenty-five degrees (125).

3. The case of any of the preceding claims, further comprising:
a third panel (130) adjacent to the second panel (120),
wherein:
when the case (100) is in the open configuration, when the at least one protrusion (215, 816) is placed on the flat surface (180), and when the first surface (111) is coupled to the at least the portion of the electrical device, the third panel (130) contacts the flat surface (180) and is at a second angle with the flat surface (180).

4. The case of claim 3, wherein:
the second angle is substantially zero.

5. The case of claims 1 or 2, further comprising:
a third panel (130) adjacent to the second panel (120);
a fourth panel (140) adjacent to the third panel (130), and
wherein:
the first, second, third, and fourth panels (110, 120, 130, 140) can be folded together to place the case in a closed configuration and define an interior space of the case; and
when the first surface (111) is coupled to the at least the portion of the electrical device (290) and the first, second, third, and fourth panels (110, 120, 130, 140) are folded together, the electrical device is located in the interior space of the case.

6. The case of claims 1 or 2, further comprising:
a third panel (130) adjacent to the second panel (120), the third panel (130) comprising a viewing screen (135),
wherein:
at least a portion of the viewing screen (135) extends from the third panel (130) towards the electrical device (290) when the first surface (111) is coupled to the at least the portion of the electrical device and when the case is placed in a closed position.

7. The case of any of the preceding claims, wherein:
the first panel (110) comprises:
an outer layer (614);
a stiffener layer (616) coupled to the outer layer; and
an inner layer (617) with an interior surface (665) and coupled to the stiffener layer (616); and
the interior surface (665) of the inner layer (617) forms at least a portion of the first surface (111) of the first panel (110).

8. A method of using a case (100) with an electrical device (290) comprising:
providing the case to comprise:
a first panel (110) with an interior surface (111);
a second panel (120) with an exterior surface (321) and adjacent to the first panel (110) at a first hinge (119); and
at least one protrusion (215, 816) at the exterior surface (321) of the second panel (120);
coupling the electrical device to the case at the interior surface (111) of the first panel (110); and
placing the case in an open configuration and on a flat surface (180) with the at least one protrusion (215, 816) in contact with the flat surface such that the first panel (110) is separated from the flat surface by the at least one protrusion, the second panel (120) contacts the first panel (110) only at the first hinge (119), and the first panel (110) does not contact the flat surface (180).

9. The case of any of claims. 1 through 7, wherein:
the first panel (110), the second panel (120) and the third panel (130) are configured such that the electrical device (290) is operational by a user through the electrical device holder when the housing (171) at least partially encloses at least the portion of the electrical device (290) and when the electrical device holder is in the closed configuration.

10. The case of claim 6, wherein:
the viewing screen (135) comprises a first exterior surface and a first interior surface opposite the first exterior surface;
the first exterior surface is substantially planar;
a first portion (737) of the viewing screen (135) has a first thickness;
a second portion (738) of the viewing screen (135) has a second thickness;
the first thickness is greater than the second thickness; and
the electrical device (290) is viewable and usable through the viewing screen (135).

## Patentansprüche

1. Gehäuse (100) für eine elektrische Vorrichtung (290), die fähig ist, in einem offenen Aufbau auf einer flachen Oberfläche (180) angeordnet zu werden, wobei das Gehäuse aufweist:
eine erste Platte (110) mit einer ersten Oberfläche (111), die fähig ist,
abnehmbar mit wenigstens einem Abschnitt der elektrischen Vorrichtung verbunden zu werden;
eine zweite Platte (120) mit einer Außenoberfläche (321), die an einem ersten Gelenk (119) an die erste Platte angrenzt; und
wenigstens einen Vorsprung (215, 816) auf der Außenoberfläche der zweiten Platte (120),
wobei:
wenn das Gehäuse in dem offenen Aufbau ist, wenn der wenigstens eine Vorsprung (215, 816) auf der flachen Oberfläche (180) angeordnet ist und
wenn die erste Oberfläche (111) mit dem wenigstens einen Abschnitt der elektrischen Vorrichtung verbunden ist, der wenigstens eine Vorsprung (215, 816), die zweite Platte (120) und die erste Platte (110) derart aufgebaut sind, dass der wenigstens eine Vorsprung (215, 816) das Gehäuse zumindest teilweise trägt, die erste Platte (110) einen ersten Winkel (512) mit der flachen Oberfläche (180) bildet, die zweite Platte (120) die erste Platte (110) nur an dem ersten Gelenk (119) berührt und die erste Platte (110) die flache Oberfläche (180) nicht berührt.

2. Gehäuse nach Anspruch 1, wobei:
der erste Winkel (512) im Wesentlichen fünfundfünfzig (55) Grad ist; und
ein zweiter Winkel (513) zwischen der ersten Platte (110) und der flachen Oberfläche (180) im Wesentlichen einhundertiünfundzwanzig Grad (125) ist,

3. Gehäuse nach einem der vorhergehenden Ansprüche, das ferner aufweist:
eine dritte Platte (130), die an die zweite Platte (120) angrenzt,
wobei:
wenn das Gehäuse (100) in dem offenen Aufbau ist, wenn der wenigstens eine Vorsprung (215, 816) auf der flachen Oberfläche (180) angeordnet ist und
wenn die erste Oberfläche (111) wenigstens mit dem Abschnitt der elektrischen Vorrichtung verbunden ist, die dritte Platte (130) die flache Oberfläche (180) berührt und einen zweiten Winkel mit der flachen Oberfläche (180) bildet.

4. Gehäuse nach Anspruch 3, wobei:
der zweite Winkel im Wesentlichen null ist.

5. Gehäuse nach Anspruch 1 oder 2, das ferner aufweist:
eine dritte Platte (130), die an die zweite Platte (120) angrenzt;
eine vierte Platte (140), die an die dritte Platte (130) angrenzt, und
wobei:
erste, zweite, dritte und vierte Platte (110, 120, 130, 140) zusammengefaltet werden können, um das Gehäuse in einem geschlossenen Aufbau anzuordnen und einen Innenraum des Gehäuses zu definieren; und
die elektrische Vorrichtung sich in dem Innenraum des Gehäuses befindet,
wenn die erste Oberfläche (111) wenigstens mit dem Abschnitt der elektrischen Vorrichtung (290) verbunden ist und erste, zweite, dritte und vierte Platte (110, 120, 130, 140) zusammengefaltet sind,

6. Gehäuse nach Anspruch 1 oder 2, das feiner aufweist:
eine dritte Platte (130), die zu der zweiten Platte (120) benachbart ist, wobei die dritte Platte (130) einen Bildschirm (135) aufweiset,
wobei:
wenigstens ein Abschnitt des Bildschirms (135) sich von der dritten Platte (130) zu der elektrischen Vorrichtung (290) erstreckt, wenn die erste Oberfläche (111) wenigstens mit dem Abschnitt der elektrische Vorrichtung verbunden ist und wenn das Gehäuse in einer geschlossenen Position angeordnet ist.

7. Gehäuse nach einem der vorhergehenden Ansprüche, wobei:
die erste Platte (110) aufweist:
eine Außenschicht (614);
eine mit der Außenschicht verbundene Versteifungsschicht (616); und
eine mit der Versteifungsschicht (616) verbundene Innenschicht (617) mit einer Innenoberfläche (665); wobei
die Innenoberfläche (665) der Innenschicht (617) wenigstens einen Abschnitt der ersten Oberfläche (111) der ersten Platte (110) bildet.

8. Verfahren zur Verwendung eines Gehäuses (100) mit einer elektrischen Vorrichtung (290), das aufweist:
Bereitstellen des Gehäuses, so dass es aufweist:
eine erste Platte (110) mit einer Innenoberfläche (111);
eine zweite Platte (120) mit einer Außenoberfläche (321), die an einem ersten Gelenk (119) an die erste Platte (110) angrenzt; und
wenigstens einen Vorsprung (215, 816) auf der Außenoberfläche (321) der zweiten Platte (120),
Verbinden der elektrischen Vorrichtung mit dem Gehäuse an der Innenoberfläche (111) der ersten Platte (110); und
Anordnen des Gehäuses in einem offenen Aufbau und auf einer flachen Oberfläche (180) mit dem wenigstens einen Vorsprung (215, 816) in Kontakt mit der flachen Oberfläche, so dass die erste Platte (110) durch den wenigstens einen Vorsprung von der flachen Oberfläche getrennt wird, wobei die zweite Platte (120) die erste Platte (110) nur an dem ersten Gelenk (119) berührt und die erste Platte (110) die flache Oberfläche (180) nicht berührt.

9. Gehäuses nach einem der Ansprüche 1 bis 7, wobei:
die erste Platte (110), die zweite Platte (120) und die dritte Platte (130) derart aufgebaut sind, dass die elektrische Vorrichtung (290) für einen Benutzer durch die Halterung der elektrischen Vorrichtung betriebsfähig ist, wenn das Gehäuse (171) den Abschnitt der elektrischen Vorrichtung (290) wenigstens teilweise umschließt, und wenn die Halterung der elektrischen Vorrichtung in dem geschlossenen Aufbau ist.

10. Gehäuse nach Anspruch 6, wobei:
der Bildschirm (135) eine erste Außenoberfläche und eine erste Innenoberfläche abgewandt zu der ersten Außenoberfläche aufweist;
die erste Außenoberfläche im Wesentlichen eben ist;
ein erste Abschnitt (737) des Bildschirms (135) eine erste Dicke hat;
ein zweiter Abschnitt (738) des Bildschirms (135) eine zweite Dicke hat;
wobei die erste Dicke größer als die zweite Dicke ist; und
die elektrische Vorrichtung (290) durch den Bildschirm (135) sichtbar und nutzbar ist.

## Revendications

1. Étui (100) pour un dispositif électrique (290) capable d'être placé dans une configuration ouverte sur une surface plate (180), l'étui comprenant :
un premier panneau (110) avec une première surface (111) capable d'être accouplée de façon amovible avec au moins une partie du dispositif électrique ;
un deuxième panneau (120) avec une surface extérieure (321) et adjacent au premier panneau au niveau d'une première articulation (119) ; et
au moins un e protubérance ( 215, 8 16) sur la surface extérieure du deuxième panneau (120),
dans lequel :
lorsque l'étui est dans la configuration ouverte, lorsque l'au moins une protubérance (215, 816) est placée sur la surface plate (180) et lorsque la première surface (111) est accouplée avec l'au moins une partie du dispositif électrique, l'au moins une protubérance (215, 816), le deuxième panneau (120), et le premier panneau (110) sont configurés de sorte que l'au moins une protubérance (215, 816) supporte l'étui au moins partiellement, le premier panneau (110) forme un premier angle (512) avec la surface plate (180), le deuxième panneau (120) entre en contact avec le premier panneau (110) seulement au niveau de la première articulation (119), et le premier panneau (110) n'entre pas en contact avec la surface plate (180).

2. Étui selon la revendication 1, dans lequel :
le premier angle (512) est sensiblement égal à cinquante-cinq degrés (55); et
un second angle (513) entre le premier panneau (110) et la surface plate (180) est sensiblement égal à cent-vingt-cinq degrés (125).

3. Étui selon l'une quelconque des revendications précédentes, comprenant en outre :
un troisième panneau (130) adjacent au deuxième panneau (120),
dans lequel :
lorsque l'étui (100) est dans la configuration ouverte, lorsque l'au moins une protubérance (215, 816) est placée sur la surface plate (180), et lorsque la première surface (111) est accouplée avec l'au moins une partie du dispositif électrique, le troisième panneau (130) entre en contact avec la surface plate (180) et est à un second angle avec la surface plate (180).

4. Étui selon la revendication 3, dans lequel :
le second angle est sensiblement égal à zéro.

5. Étui selon les revendications 1 ou 2, comprenant en outre :
un troisième panneau (130) adjacent au deuxième panneau (120) ;
un quatrième panneau (140) adjacent au troisième panneau (130), et
dans lequel :
les premier, deuxième, troisième et quatrième panneaux (110, 120, 130, 140) peuvent être pliés ensemble pour placer l'étui dans une configuration fermée et définir un espace intérieur de l'étui ; et
lorsque la première surface (111) est accouplée avec l'au moins une partie du dispositif électrique (290) et les premier, deuxième, troisième et quatrième panneaux (110, 120, 130, 140) sont pliés ensemble, le dispositif électrique est positionné dans l'espace intérieur de l'étui.

6. Étui selon les revendications 1 ou 2, comprenant en outre :
un troisième panneau (130) adjacent au deuxième panneau (120), le troisième panneau (130) comprenant un écran de visionnement (135),
dans lequel :
au moins une partie de l'écran de visionnement (135) s'étend à partir du troisième panneau (130) vers le dispositif électrique (290) lorsque la première surface (111) est accouplée avec l'au moins une partie du dispositif électrique et lorsque l'étui est placé dans une position fermée.

7. Étui selon l'une quelconque des revendications précédentes, dans lequel :
le premier panneau (110) comprend :
une couche extérieure (614) ;
une couche de contrefort (616) accouplée avec la couche extérieure ; et
une couche intérieure (617) avec une surface intérieure (665) et accouplée avec la couche de contrefort (616) ; et
la surface intérieure (665) de la couche intérieure (617) forme au moins une partie de la première surface (111) du premier panneau (110).

8. Procédé d'utilisation d'un étui (100) avec un dispositif électrique (290) comprenant les étapes consistant à :
fournir l'étui pour comprendre :
un premier panneau (110) avec une surface intérieure (111) ;
un deuxième panneau (120) avec une surface extérieure (321) et adjacent au premier panneau (110) au niveau d'une première articulation (119) ; et
au moins une protubérance (215, 816) sur la surface extérieure (321) du deuxième panneau (120) ;
accoupler le dispositif électrique avec l'étui au niveau de la surface intérieure (111) du premier panneau (110) ; et
placer l'étui dans une configuration ouverte et sur une surface plate (180) avec l'au moins une protubérance (215, 816) en contact avec la surface plate de sorte que le premier panneau (110) soit séparé de la surface plate par l'au moins une protubérance, le deuxième panneau (120) entre en contact avec le premier panneau (110) seulement a niveau de la première articulation (119), et le premier panneau (110) n'entre pas en contact avec la surface plate (180).

9. Étui selon l'une quelconque des revendications 1 à 7, dans lequel :
le premier panneau (110), le deuxième panneau (120) et le troisième panneau (130) sont configurés de sorte que le dispositif électrique (290) soit opérationnel par un utilisateur à travers le support de dispositif électrique lorsque le logement (171) enferme au moins partiellement au moins la partie du dispositif électrique (290) et lorsque le support de dispositif électrique est dans la configuration fermée.

10. Étui selon la revendication 6, dans lequel :
l'écran de visionnement (135) comprend une première surface extérieure et une première surface intérieure opposée à la première surface extérieure ;
la première surface extérieure est sensiblement plane ;
une première partie (737) de l'écran de visionnement (135) possède une première épaisseur ;
une seconde partie (738) de l'écran de visionnement (135) possède une seconde épaisseur ;
la première épaisseur est supérieure à la seconde épaisseur ; et
le dispositif électrique (290) peut être vu et utilisé à travers l'écran de visionnement (135).
